Europäisches Patentamt

European Patent Office

Office européen des brevets

(11) Publication number: **0 169 619**
**B1**

## (12) EUROPEAN PATENT SPECIFICATION

(45) Date of publication of patent specification: **11.04.90**

(21) Application number: **85201210.3**

(22) Date of filing: **19.07.85**

(51) Int. Cl.⁵: **A 01 B 3/42,** A 01 B 15/14,
A 01 B 17/00

(54) A plough.

(30) Priority: **23.07.84 NL 8402323**

(43) Date of publication of application:
**29.01.86 Bulletin 86/05**

(45) Publication of the grant of the patent:
**11.04.90 Bulletin 90/15**

(84) Designated Contracting States:
**DE FR GB NL SE**

(56) References cited:
**WO-A-84/02250**
**DE-A-1 963 277**
**DE-C- 483 094**
**FR-A-1 423 380**
**FR-A-2 173 784**
**FR-A-2 293 863**
**GB-A- 928 424**
**NL-A- 89 902**
**US-A-3 481 407**
**US-A-3 517 748**

(73) Proprietor: **C. van der Lely N.V.**
**Weverskade 10 P.O. Box 26**
**NL-3155 ZG Maasland (NL)**

(72) Inventor: **van der Lely, Cornelis**
**7 Brüschenrain**
**Zug (CH)**

(74) Representative: **Mulder, Herman et al**
**Octrooibureau Van der Lely N.V. Weverskade 10**
**P.O. Box 26**
**NL-3155 ZG Maasland (NL)**

Courier Press, Leamington Spa, England.

EP 0 169 619 B1

## Description

The invention relates to a plough comprising a frame having coupling means for coupling the plough to a tractor, and a plurality of plough bodies, whereby at least one plough body is adjustable upwardly and downwardly from the tractor in a plurality of working positions by means of a pivotable quadrilated linkage.

A plough of the kind set forth is known from the Dutch Patent 89 902.

With the known ploughs the working depth of the various plough bodies can be altered to some extent prior to starting the operation. Hereby the position of the plough bodies with respect to the soil to be worked remains the same.

The invention has for its object to provide the possibility of adapting the plough setting to varying conditions in a field, for example as regards the type of soil of the moisture content of the soil, by means of a simple adjustment from the tractor.

In accordance with the invention the distance between the front pivot pins is less than the distance between the rear pivot pins of the linkage.

With a plough in accordance with the invention it is possible, if so desired, to adjust the working depth and at the same time the position of the plough body to prevailing circumstances without it being necessary to leave the tractor.

From the French patent 2 173 784 a reversible plough is known, whereby of a pair of plough bodies a plough body can be brought into its working pposition by means of an adjustment mechanism that can be activated from a tractor. The adjustment mechanism also affords a safety device by means of which a plough body, during operation, can deflect rearwardly and upwardly when encountering a hard object, like a stone.

For a better understanding of the present invention and to show how it may be carried into effect, reference will now be made, by way of example, to the accompanying drawings, in which:

Figure 1 is a plan view of a plough;

Figure 2 is a side view taken in the direction of the arrow II in Figure 1;

Figure 3 is a partial side view, on an enlarged scale, showing the plough in an adjusted condition;

Figure 4 is a fragmentary side view, on a further enlarged scale, showing the mounting of a plough body; and

Figure 5 is a view taken in the direction of the arrow V in Figure 4.

The figures represent a soil tilling machine, in the form of a reversible plough.

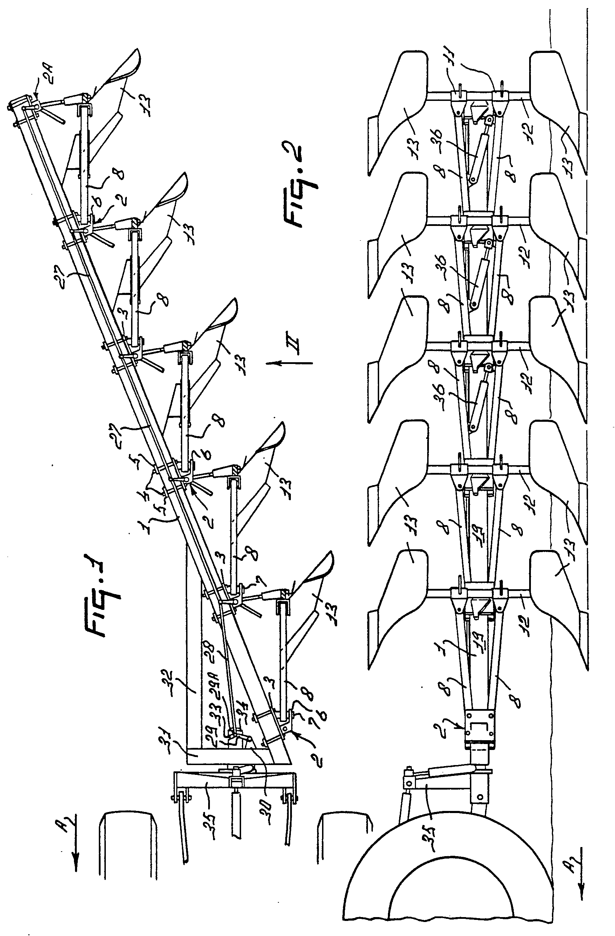

The plough comprises a frame beam 1 which is substantially horizontal. The longitudinal axis of the beam 1, us shown in Figure 1, is inclined at an angle of approximately 30° to the intended direction of operative travel, indicated by an arrow A.

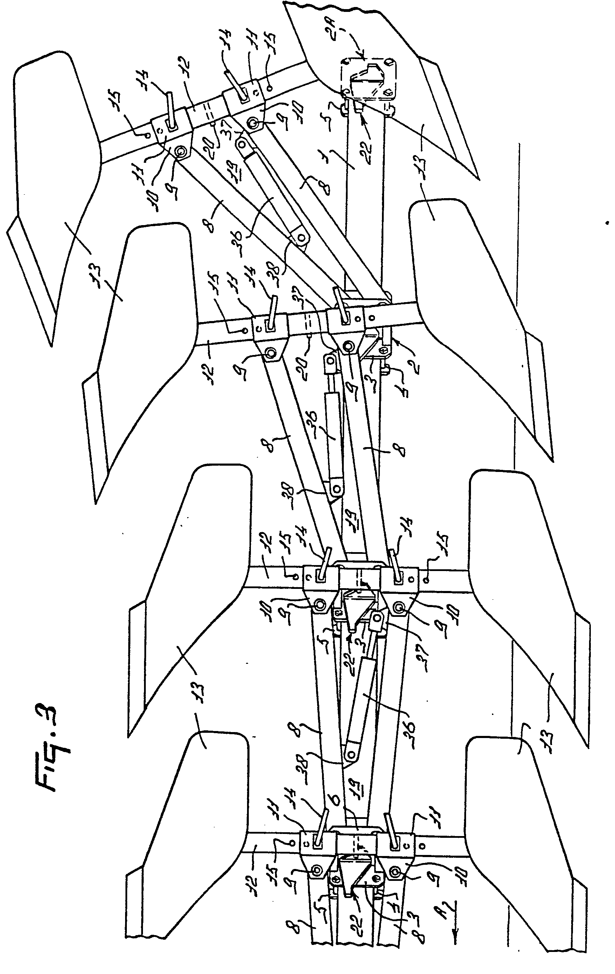

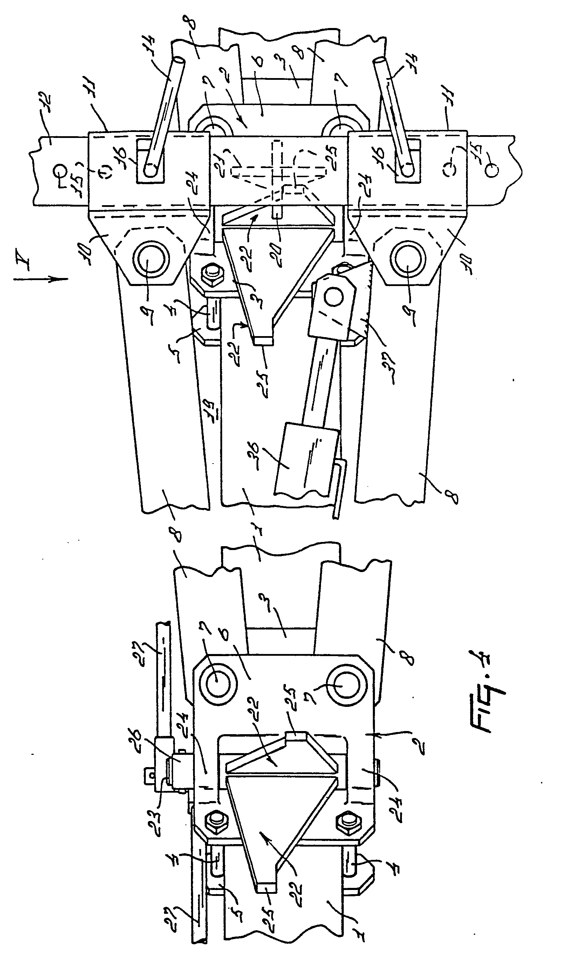

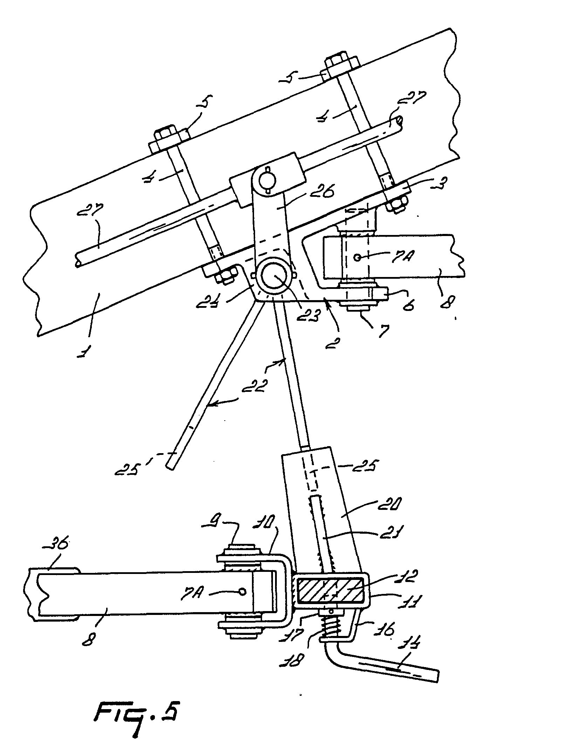

Five supporting members 2 and a sixth rearmost supporting member 2A are regularly distributed along one side of the frame beam 1, the front supporting member 2 being situated near the front end of the frame beam 1 and the rearmost supporting member 2A being situated at the rear end of the frame beam 1 (Figure 1). Each supporting member 2 comprises a vertical support plate 3, which is substantially square and is secured at the corners by means of bolts 4, which co-operate with supporting strips provided on the other side of the frame beam. The supporting member 2A is secured in a similar way using similar means. Each supporting member 2 further comprises a folded-over plate 6 which is fixed near its front end to the supporting plate 3 and has a part which extends predominantly in the direction A, so as to define a space between the supporting plate 3 and the plate 6 (Figure 1). Straight arms 8 are pivotably mounted between the supporting plate 3 and the plate 6 by pivot pins 7 which extend to the rear substantially horizontally in the direction A. The arms 8 are made fast with the pins 7 by locking pins 7A (Figure 5). As is shown in figures 2 and 4, the pins 7 of each supporting member 2 are disposed substantially one above the other. The rear ends of the arms 8 are rotatably mounted between the limbs of a bracket 10 by means of pivot pins 9 which extend horizontally. The limbs of the respective brackets 10 extend substantially in the direction A. Each of the pivot pins 9 is supported in the limbs of a bracket 10, and each of the arms 8 comprises a bushing through which the pin 9 extends. Each arm 8 is made fast with its pivot pin 9 by means of a locking pin 7A.

The rear end of each bracket 10 is provided with a rectangular sleeve 11 enclosing a common carrier 12 for the two plough bodies 13. The carrier 12 is straight and extends substantially vertically. Each sleeve 11 has an aperture for receiving the end of a spring-loaded pin 14 which can also be inserted into any one of a plurality of vertically spaced holes 15 in the carrier 12. The pin 14 extends through a hole in a supporting member 16 which is bent thorugh a right angle and is secured to the sleeve 10 (Figures 4 and 5). A stop 17 is fixed to the pin 14 by means of a locking pin. A spring 18 surrounding the pin 14 acts between the stop 17 and the supporting member 16, and biasses the step 17 into contact with the outer face of the sleeve 11 (Figure 5). By adjusting the sleeves 11 relatively to the carrier 12, it is possible to change the spacing between the transverse axes 9 which are situated substantially vertically one above the other. The transverse axes 7 and 9 constitute the hinged corners of a pivotable polygonal linkage 19, which in this example is a quadrilateral linkage lying substantially parallel to a vertical plane extending in the direction A. On the side facing the frame beam 1, each carrier 12 is provided midway along its length with a supporting plate 20 the plane of which is substantially horizontal. The plate 20 is substantially perpendicular to the longitudinal axes of the adjacent sleeves 11 and projects somewhat obliquely forwardly from its junction with the respective carrier 12 (Figure 5). The lower and upper faces of the plate 10 are each provided with a substantially central stiffening rib 21.

One stop of a pair of stops 20 can co-operate with each plate 22 to limit downwards travel of a respective operative plough body 13.

Each stop 22 is in the form of a plate (Figures 3 and 4). The stops 22 of each pair enclose an angle of approximately 30° and are mounted on a substantially vertical shaft 23 with their widest edges extending substantially vertically. The shaft 23 constitutes a hinge pin which is supported by bearings in lugs 24 which are connected to the supporting plate 3 and to the plate 6 and are situated at the front end of the supporting member 2, near the top and bottom.

The design of the supporting member 2 for the front pair of plough bodies makes it capable of supporting a shaft 23, although no shaft 23 is actually present. As shown in Figure 4, each stop 22 is substantially in the shape of a right angled triangle, the shorter edge being secured to the shaft 23. Because a stop 22 is provided for each plough body 13 of each pair, the stops 22 of each pair are turned through 180° relatively to each other (Figure 4), i.e. one is upside down with respect to the other. Downward travel of the respective plough body 13 is limited by contact between the hypotenuse edge of the stop 22 and the plate 20 on the carrier 12. For this purpose, the hypotenuse edge, at the end adjacent the longer edge defining the right angle, meets an edge of a projecting portion 25, the opposite edge of which is a continuation of the longer edge defining the right angle. This projecting portion 25 is the portion which engages the plate 20 to limit downward travel of an operative plough body 13.

An adjusting device is provided for positioning one or the other stop 22 of each pair in an operative position, depending on which plough body 3 of each pair is operative. The adjusting device comprises arms 26 provided at the upper end of each of the shafts 23, these arms being rigidly secured to their shafts by means of locking pins. Each of the arms 26 is pivotally connected to a rod 27 which extends in the longitudinal direction of, and above, the frame beam. The rod 27 terminates at the front in the region of the second supporting member 2 from the front of the frame beam 1, where it is pivotally connected to a rod 28 which in turn is pivotally connected near its front end to one end of an arm 29 by means of a hinge pin 29A. The other end of the arm 29 is pivotally supported by a lug 30, which is connected to a carrier 31 which is connected at one end to the front end of the frame beam. The other end of the carrier 31 is connected to the frame beam 1 via a bracing member 32, which extends in the direction A (Figure 1). The hinge pin 29A between the arm 29 and the front end of the rod 28 is received in a guide track 33 formed around the circumference of a shaft 34 through approximately 180°. The shaft 34 extends in the direction A and is connected to a trestle 35 which can be hitched to the three-point lifting device of a tractor. The shaft 34 is part of a mechanism, not shown in detail, for reversing the plough.

A double-acting hydraulic adjusting cylinder 36 is provided between the upper and lower arms 8 of the pivotable linkage 19 for each of the last three plough bodies 13. Each adjusting cylinder 36 is pivotably connected at one end to a lug 37 on the lower arm 8 and at the other end to a lug 38 on the upper arm 8. Each cylinder 36 is connected to the hydraulic system of a tractor by means of ducts, not shown, which extend to the front along the frame beam 1.

During operation, the plough is hitched to the three-point lifting device of a tractor by means of the trestle 35 and the hydraulic adjusting cylinders are connected to the hydraulic circuit of the tractor by means of the ducts mentioned above. After a predetermined working depth has been set, the plough is drawn by the tractor in the direction indicated by the arrow A, the lower plough bodies 13 of each pair cutting out contiguous furrow-slices and throwing them aside. Downward travel of the plough bodies 13 is prevented, so maintaining the adjusted depth, with the aid of the stops 22 which are disposed near each plough body in a position in which the portion 25 can cooperate with the inwardly extending plate 20 situated near the centre of the carrier 12.

During operation, each operative plough body 13 is supported by means of the pivotable quadrilateral linkage 19, comprising the transverse axes 7 and 9 and the rearwardly extending straight arms 8. The distance between the hinge pins 7 at the front is smaller than the distance between the hinge pins 9 at the rear. The result of this is that, when a plough body hits an obstacle, it can deflect upwards and to the rear. The extent of the rearwards deflection depends on the spacing between the rear transverse axes 9, the greater the spacing the greater the travel to the rear. Thus the plough body can pass over or along the obstacle and damage is prevented.

As mentioned previously, the spacing between the rearmost hinge pins 9 can be altered by positioning the sleeves 11 with the aid of the spring loaded pins 14. The three rearmost pairs of plough bodies 13 can be adjusted upwardly and downwardly from the tractor by means of the hydraulic adjusting cylinders 36, in order to make it possible for these plough bodies to work less deeply during operation, which may be advantageous when the work must be done along ditches and fences, the last furrow then being prevented from becoming unnecessarily deep. Readjusting the plough bodies can be effected very rapidly. It is alternatively possible to move the last three pairs of plough bodies in the vertical direction, such that the lower plough bodies of these three pairs are made inoperative, so that ploughing is effected only with the lower plough bodies of the front two pairs.

Obviously it is alternatively possible to provide a hydraulic adjusting cylinder for the front two plough bodies so they, too, can be adjusted upwardly and downwardly. When the plough bodies are moved in the horizontal direction, the stops 22 are not inconvenient as they limit downward travel only. If the plough is reversed for the next run, the previously operative stop 22 of each pair is put out of operation via the rods 27 and 28 and the arms 26, and the other stop 22 is brought into position by turning the shaft 23, so that the portion 25 of this stop can co-operate with the plate 20. Displacement of the rods 27 and 28 is effected by means of the guide track 35 on the shaft 34. Starting from the position shown in Figure 1, the hinge pin 29A moves forwardly upon rotation of the plough, along the guide track 33, causing the shafts 23 to turn so that the front stop of each pair, as seen in Figure 1, is moved to a position in which it can co-operate with the respective plate 20, whereby, in the new working position, downwards travel of the plough bodies 13 is limited.

Whilst various features of the plough that have been described, and that are illustrated in the drawings, will be set forth in the following claims as inventive features, it is to be noted that the invention is not necessarily limited to these features and that it encompasses all of the features that have been described both individually and in various combinations.

## Claims

1. A plough comprising a frame (1) having coupling means (35) for coupling the plough to a tractor, and a plurality of plough bodies (13), whereby at least one plough body (13) is adjustable upwardly and downwardly from the tractor in a plurality of working positions by means of a pivotable quadrilateral linkage (19), characterised in that the distance between the front pivot pins (7) is less than the distance between the rear pivot pins (9) of the linkage (19).

2. A plough as claimed in claim 1, characterized in that the pivot pins (7, 9) of the pivotable quadrilateral linkage (19) extend substantially horizontally and transversely of the intended direction (A) of operative travel of the plough.

3. A plough as claimed in claim 1 or 2, characterized in that the pivotable quadrilateral linkage (19) extends substantially parallel to the intended direction (A) of operative travel of the plough.

4. A plough as claimed in claim 2 or 3, characterized in that the distance between the rear pivot pins (9) of the linkage is adjustable.

5. A plough as claimed in any preceding claim, characterized in that the pivotable quadrilateral linkage comprises two straight arms (8) extending substantially in the intended direction (A) of operative travel of the plough, the adjusting cylinder (36) extending between the arms (8) and being connectable in the hydraulic circuit of the tractor.

6. A plough as claimed in any preceding claim, characterized in that the pivotable quadrilateral linkage (19) is provided between a supporting member (2) on a frame beam (1) of the plough and an upwardly extending plough body carrier (12).

7. A plough as claimed in claim 6 when appendant to claim 5, characterized in that the rear pivot pins (9) of the linkage (19) are provided on sleeves (11) which are adjustable relatively to the plough body carirer (12).

8. A plough as claimed in claim 7, characterized in that each sleeve (11) is flexible in any one of a plurality of positions by means of a spring-loaded pin (14) and a plurality of vertically spaced holes (15) in the carrier (12).

9. A plough as claimed in any one of claims 6 to 8, characterized in that the carrier (12) is provided at each of its ends with a said plough body (13), the plough being a reversible plough.

## Patentansprüche

1. Pflug mit einem Rahmen (1), der eine Kupplungsvorrichtung zum Anschließen des Pfluges an einen Schlepper aufweist, und mit einer Mehrzahl von Pflugkörpern (13), wobei mindestens ein Pflugkörper vom Schlepper aus mittels eines Viergelenk-Gestänges (19) aufwärts und abwärts in mehrere Arbeitslagen einstellbar ist, dadurch gekennzeichnet, daß der Abstand zwischen den vorderen Gelenkbolzen (7) des Gestänges (19) kleiner ist als der Abstand zwischen dessen hinteren Gelenkbolzen (9).

2. Pflug nach Anspruch 1, dadurch gekennzeichnet, daß die Gelenkbolzen (7, 9) des Viergelenk-Gestänges (19) im wesentlichen horizontal und quer zur Arbeitsrichtung (A) des Pfluges liegen.

3. Pflug nach Anspruch 1 oder 2, dadurch gekennzeichnet, daß sich das Viergelenk-Gestänge (19) im wesentlichen parallel zur Arbeitsrichtung (A) des Pfluges erstreckt.

4. Pflug nach Anspruch 2 oder 3, dadurch gekennzeichnet, daß der Abstand zwischen den hinteren Gelenkbolzen (9) des Gestänges (19) einstellbar ist.

5. Pflug nach einem der vorhergehenden Ansprüche, dadurch gekennzeichnet, daß das Viergelenk-Gestänge zwi geradlinige Arme (8) aufweist, die sich im wesentlichen in Arbeitsrichtung (A) des Pfluges erstrecken, und daß sich der Stellzylinder (36) zwischen den Armen (8) ersterckt und an das hydraulische System des Schleppers anzuschließen ist.

6. Pflug nach einem der vorhergehenden Ansprüche, dadurch gekennzeichnet, daß das Viergelenk-Gestänge (19) zwischen einem an einem Rahmenbalken (1) des Pfluges befindlichen Tragglied (2) und einem aufwärts gerichteten Pflugkörper-Träger (12) angeordnet ist.

7. Pflug nach Anspruch 6, soweit von Anspruch 5 abhängig, dadurch gekennzeichnet, daß die hinteren Gelenkbolzen (9) des Gestänges (19) an Buchsen (11) vorgesehen sind, die relativ zu dem Pflugkörper-Träger (12) verstellbar sind.

8. Pflug nach Anspruch 7, dadurch gekennzeichnet, daß jede Buchse (11) mittels eines federbelasteten Stiftes (14) und einer Mehrzahl von mit vertikalem Abstand voneinander im Träger (12) vorgesehenen Löchern (15) in einer von mehreren Positionen fixierbar ist.

9. Pflug nach einem der Ansprüche 6 bis 8, dadurch gekennzeichnet, daß der Träger (12) an seinen beiden Enden mit je einem Pflugkörper (13) versehen ist, wobei der Pflug als Drehpflug ausgebildet ist.

**Revendications**

1. Charrue comprenant un chassis (1) ayant des moyens d'attelage (35) pour atteler la charrue à un tracteur, et une pluralité de corps de charrue (13), dans laquelle au moins un corps de charrue (13) est réglable vers le haut et vers le bas à partir du tracteur en une pluralité de positions de travail au moyen d'une liaison articulée (19) quadrilatérale, caractérisée en ce que la distance entre les pivots antérieurs (7) est moindre que la distance entre les pivots postérieurs (9) de la liaison (19).

2. Charrue selon la revendication 1, caractérisée en ce que les pivots (7, 9) de la liaison articulée quadrilatérale (19) s'étendant sensiblement horizontalement et transversalement au sens de marche (A) prévu pour le travail de la charrue.

3. Charrue selon la revendication 1 ou 2, caractérisée en ce que la liaison articulée quadrilatérale (19) s'étend sensiblement parallèlement au sens de marche (A) prévu pour le travail de la charrue.

4.· Charrue selon la revendication 2 ou 3, caractérisée en ce que la distance entre les pivots postérieurs (9) de la liaison articulée (19) est réglable.

5. Charrue selon l'une quelconque des revendications précédentes, caractérisée en ce que la liaison articulée quadrilatérale comprend deux bras rectilignes (8) s'étendant sensiblement dans le sens de marche (A) prévu pour le travail de la charrue, le vérin de réglage (36) s'étendant entre les bras (8) et pouvant être relié au circuit hydraulique du tracteur.

6. Charrue selon l'une quelconque des revendications précédentes, caractérisée en ce que la liaison articulée quadrilatérale (19) est prévue entre un organe de support (2), sur une poutre du chassis (1) de la charrue et un support (12) de corps de charrue s'étendant vers le haut.

7. Charrue selon la revendication 6 quand celle-ci dépend de la revendication 5, caractérisée en ce que les pivots postérieurs (9) de la liaison (19) sont prévus sur des manchons (11) qui sont réglables par rapport au support (12) du corps de charrue.

8. Charrue selon la revendication 7, caractérisée en ce que chaque manchon (11) peut être fixé en l'une quelconque d'une pluralité de positions au moyen d'un goujon (14) sollicité par un ressort et d'une pluralité de trous (15) espacés verticalement dans le support (12).

9. Charrue selon l'une quelconque des revendications 6 à 8, caractérisée en ce que le support (12) est muni sur chacune de ses extrémités d'un desdits corps de charrue (13), la charrue étant une charrue réversible.

EP 0 169 619 B1

FIG.1

FIG.2

Fig.3

Fig. 4

FIG. 5